# EUROPÄISCHE PATENTSCHRIFT

(11) **EP 1 858 300 B1**
(45) Veröffentlichungstag und Bekanntmachung des Hinweises auf die Patenterteilung: **04.05.2011**
(21) Anmeldenummer: 07009615.1
(22) Anmeldetag: 14.05.2007
(51) Int. Cl.: H05B 6/12, H05B 6/36

(54) **Induktionskochfeld**
Induction cooking hob
Champ de cuisson à induction

(30) Priorität: 20.05.2006 DE 102006023800
(43) Veröffentlichungstag der Anmeldung: 21.11.2007
(60) Teilanmeldung: 10179112.7
(73) Patentinhaber: Electrolux Home Products Corporation N.V., 1130 Brussels (BE)
(72) Erfinder: Leidig, Karl, Dr., 91610 Insingen (DE); Herzog, Michael, 91610 Insingen (DE)
(74) Vertreter: Hochmuth, Jürgen

(56) Entgegenhaltungen:
- EP-A2- 1 206 164
- WO-A-97/37515
- DE-A1- 19 845 844
- GB-A- 2 389 767

## Beschreibung

Die Erfindung betrifft ein Induktionskochfeld gemäß dem Oberbegriff des Patentanspruches 1.

Bei einem Induktionskochfeld wird mittels einer oder mehrerer Induktionspulen ein magnetisches Wechselfeld erzeugt. Die Induktionsspulen sind meist flächenartig ausgebildet und an der Unterseite eines Trägersubstrats angebracht. Ein Garbehälter für das Induktionskochfeld weisen zumindest teilweise ferromagnetisches Material auf. Das magnetische Wechselfeld erwärmt das ferromagnetische Material des Garbehälters.

Das Trägersubstrat selbst wird dabei nicht erwärmt. Somit kann der Benutzer das Trägersubstrat auch als Arbeitsfläche verwenden. Üblicherweise sind die Induktionsspulen an der Unterseite des Trägersubstrats so angeordnet und ausgebildet, dass für Garbehälter mit einer bestimmten Größe ein entsprechendes Feld auf der Oberseite des Trägersubstrats vorgesehen ist. Der Benutzer hat somit nicht die Möglichkeit, frei zu entscheiden, welcher Garbehälter an welcher Stelle auf dem Induktionskochfeld positioniert wird.

Aus der GB 2 389 767 A ist ein Induktionskochfeld bekannt. Das Induktionskochfeld weist einen Träger auf, dessen Oberseite zum Positionieren von wenigstens einem Garbehälter vorgesehen ist. Unterhalb des Trägers ist eine erste Schicht mit Induktionsspulen angeordnet. Unterhalb der ersten Schicht sind weitere Schichten mit Induktionsspulen angeordnet. Dabei sind die benachbarten Induktionsspulen der verschiedenen Schichten einander teilweise überlappend angeordnet.

In der DE 198 45 844 A1 ist ein Induktor für ein Induktionskochfeld beschrieben, bei dem mindestens zwei Induktorspulen übereinander und voneinander beabstandet angeordnet sind. Die Induktorspulen sind als flache Leiterbahnen auf gegenüberliegenden Seiten eines plattenförmigen Substrats aufgebracht, so dass eine besonders geringe Bauhöhe für den Induktor möglich ist.

Aus der WO 97/37515 A1 ist ein homogenes Heizfeld mit flächendeckend gitterförmig angeordneten Induktionsspulen bekannt. Die Induktionsspulen sind wesentlich kleiner als das Kochgefäß und werden individuell angesteuert. Der Benutzer kann die Position des Kochgefäßes auf dem Heizfeld frei wählen und die entsprechenden Induktionsspulen mit Hilfe eines Computers ansteuern. Dabei können automatisch oder manuell nur diejenigen Induktionsspulen aktiviert werden, die sich unterhalb des Garbehälters befinden.

Es ist Aufgabe der Erfindung, ein Induktionskochfeld bereit zu stellen, bei dem der Garbehälter an unterschiedlichen Stellen auf dem Induktionskochfeld positionierbar ist, wobei eine optimale Energieübertragung vom Induktionskochfeld zum Garbehälter möglich ist.

Diese Aufgabe wird durch den Gegenstand gemäß Patentanspruch 1 gelöst.

Erfindungsgemäß ist vorgesehen, dass den Induktionsspulen wenigstens eine Selektionsschaltung vorgeschaltet ist, durch die nach einem vorbestimmten Schema ausgewählte Induktionsspulen aktiviert werden oder aktivierbar sind, wobei die Selektionsschaltung derart ausgebildet oder einstellbar ist, dass diejenige Induktionsspule aktiviert wird oder diejenigen Induktionsspulen aktiviert werden, die sich unterhalb des Garbehälters befindet bzw. befinden, und dass die überlappend angeordneten Induktionsspulen nicht gleichzeitig aktiviert werden oder aktivierbar sind, und wobei die nicht benutzten Induktionsspulen elektrisch abgekoppelt werden oder abgekoppelt sind.

Ein Aspekt der Erfindung ist, dass zwei oder mehr Induktionsspulen derart, insbesondere in Lagen oder Schichten, übereinander angeordnet sind, dass sich wenigstens zwei Induktionsspulen teilweise überlappen. Wenigstens zwei Induktionsspulen sind also nicht deckungsgleich, weisen jedoch in einer Projektion aufeinander; vorzugsweise in einer Projektionsrichtung senkrecht zum Träger, in der Projektionsebene übereinstimmende Teilbereiche auf. Dadurch hat der Benutzer mehr Möglichkeiten, die Position des Garbehälters auf dem Induktionskochfeld zu wählen. Es wird diejenige Induktionsspule bzw. es werden diejenigen Induktionsspulen aktiviert, die sich unterhalb des Garbehälters befinden. Der Benutzer kann einen Teil des Induktionskochfeldes beispielsweise als Arbeitfläche nutzen.

Dabei ist den Induktionsspulen wenigstens eine Selektionsschaltung vorgeschaltet, durch die nach einem vorbestimmten Schema ausgewählte Induktionsspulen aktiviert werden oder aktivierbar sind. Zweckmäßigerweise können solche Induktionsspulen manuell, halbautomatisch oder automatisch ausgewählt werden, die sich unterhalb des Garbehälters befinden. Dazu können Sensoren zum Erfassen der Position des Garbehälters vorgesehen sein.

Weiterhin ist die Selektionsschaltung derart ausgebildet oder einstellbar, dass die überlappend angeordneten Induktionsspulen nicht gleichzeitig aktiviert werden oder aktivierbar sind. Dadurch wird die gegenseitige magnetische Störung der Induktionsspulen verhindert. Außerdem werden die nicht benutzten Induktionsspulen elektrisch abgekoppelt, so dass keine Schaltungen durch Induktionsströme zerstört werden können.

Bevorzugt sind wenigstens eine erste Schicht mit mindestens einer Induktionsspule, die unterhalb des Trägersubstrats angeordnet ist, und wenigstens eine weitere Schicht mit jeweils mindestens einer Induktionsspule, die unterhalb der ersten Schicht angeordnet ist, an dem Träger(substrat) vorgesehen. Es sind nun vorzugsweise die Induktionsspulen der einen Schicht und die benachbarten Induktionsspulen der jeweils anderen Schicht bzw. Schichten einander teilweise überlappend angeordnet.

Bei einer programmierbaren Selektionsschaltung kann vorgesehen sein, dass die Selektionsschaltung derart programmiert oder programmierbar ist, dass die überlappend angeordneten Induktionsspulen nicht gleichzeitig aktiviert werden oder aktivierbar sind. Dadurch wird auch der schaltungstechnische Aufwand verringert.

Weiterhin kann vorgesehen sein, dass die Induktionsspulen zumindest teilweise als Leiterbahnen ausgebildet sind. Die Leiterbahnen können an der Unterseite des Trägersubstrats oder eines separaten Substrats aufgebracht sein. Mit den Leiterbahnen lässt sich das Induktionskochfeld einfach und kostengünstig herstellen.

Ebenso kann vorgesehen sein, dass die Induktionsspulen zumindest teilweise als Leiterschleifen ausgebildet sind. Auch dies ist eine einfache und kostengünstige Bauweise.

Beispielsweise sind die Induktionsspulen zumindest teilweise als kreisförmige Leiterschleifen und/oder Leiterbahnen ausgebildet.

Alternativ dazu können die Induktionsspulen zumindest teilweise als spiralförmige Leiterschleifen und/oder Leiterbahnen ausgebildet sein.

Vorzugsweise sind die Induktionsspulen einer Schicht möglichst flächendeckend angeordnet. Dies erhöht einerseits die elektrische Leistung und andererseits die Anzahl der Positioniermöglichkeiten für den Garbehälter.

Zweckmäßigerweise ist vorgesehen, dass die Induktionsspulen einer Schicht die gleiche Form und/oder die gleiche Größe aufweisen. Zweckmäßigerweise haben alle oder fast alle Induktionsspulen der Vorrichtung die gleiche Form und/oder die gleiche Größe. Dies vereinfacht den Herstellungsprozess und erhöht die Anzahl der Positioniermöglichkeiten für den Garbehälter.

Bei der bevorzugten Ausführungsform ist vorgesehen, dass eine Induktionsspule von einer Schicht und drei Induktionsspulen von einer weiteren Schicht sich überlappen. Dies ist die optimale geometrische Anordnung für die Induktionsspulen.

Weiterhin kann vorgesehen sein, dass eine Induktionsspule von einer Schicht und drei Induktionsspulen von jeder weiteren Schicht sich überlappen. Je höher die Anzahl der Schichten ist, desto höher ist auch das Auflösungsvermögen des Induktionskochfeldes.

Vorzugsweise umfasst das Induktionskochfeld eine Ferritschicht mit einer Vielzahl Ferritelementen. Dabei kann die Ferritschicht unterhalb der Schichten mit den Induktionsspulen angeordnet sein. Die Ferritelemente beeinflussen den Verlauf der magnetischen Feldlinien.

Beispielsweise sind die Ferritelemente langgestreckt ausgebildet. Dabei können die Ferritelemente zwischen zwei benachbarten Induktionsspulen von einer Schicht angeordnet sein.

Bei der bevorzugten Ausführungsform ist vorgesehen, dass die Ferritelemente eine Vielzahl gleichseitiger Dreiecke bilden. Dies passt ideal zu den kreis- oder spiralförmigen Induktionsspulen.

Beispielsweise haben die Induktionsspulen einen Durchmesser zwischen 100 mm und 200 mm. Dies ist optimal geeignet für die Garbehälter mit üblicher Größe.

Bei der bevorzugten Ausführungsform ist vorgesehen, dass der Selektionsschaltung wenigstens eine Stromversorgungsschaltung vorgeschaltet ist. Beispielsweise ist als Stromversorgungsschaltung eine Inverterschaltung vorgesehen.

Vorzugsweise ist die Anzahl der Stromversorgungsschaltungen niedriger als die Anzahl der Induktionsspulen. Dadurch werden die Baugröße des Induktionskochfeldes und die Herstellungskosten reduziert.

Bei der bevorzugten Ausführungsform ist vorgesehen, dass das Trägersubstrat aus Glaskeramik oder Glas oder Keramik hergestellt ist.

Weitere Merkmale, Vorteile und besondere Ausführungsformen der Erfindung sind Gegenstand der abhängigen Ansprüche.

Das Induktionskochfeld gemäß der Erfindung wird nachstehend anhand beispielhafter Ausführungsformen und unter Bezugnahme auf die beigefügten Zeichnungen näher erläutert. Es zeigen:
- Fig. 1: eine schematische Draufsicht und Schnittansicht eines Trägersubstrats und einer Schicht mit Induk- tionsspulen gemäß dem Stand der Technik,
- Fig. 2: eine schematische Draufsicht und Schnittansicht des Trägersubstrats und zwei Schichten mit Induk- tionsspulen gemäß der Erfindung,
- Fig. 3: eine schematische Draufsicht und Schnittansicht des Trägersubstrats und drei Schichten mit Induk- tionsspulen gemäß der Erfindung,
- Fig. 4: eine schematische Draufsicht und Schnittansicht des Trägersubstrats und drei Schichten mit Induk- tionsspulen und einer Ferritschicht mit Ferritele- menten gemäß der Erfindung,
- Fig. 5: eine schematische Draufsicht eines ersten Anwen- dungsbeispiels mit einem Garbehälter auf drei Schichten mit Induktionsspulen gemäß der Erfin- dung,
- Fig. 6: eine schematische Draufsicht eines Vergleichsbei- spiels zu Fig. 5 mit dem Garbehälter auf einer Schicht mit Induktionsspulen herkömmlicher Anord- nung,
- Fig. 7: eine schematische Draufsicht eines zweiten Anwen- dungsbeispiels mit einem Garbehälter auf drei Schichten mit Induktionsspulen gemäß der Erfin- dung,
- Fig. 8: eine schematische Draufsicht eines dritten Anwen- dungsbeispiels mit einem Garbehälter auf drei Schichten mit Induktionsspulen gemäß der Erfin- dung, und
- Fig. 9: eine schematische Draufsicht eines Vergleichsbei- spiels zu Fig. 7 und Fig. 8 mit einem Garbehälter auf einer Schicht mit Induktionsspulen herkömmli- cher Anordnung.

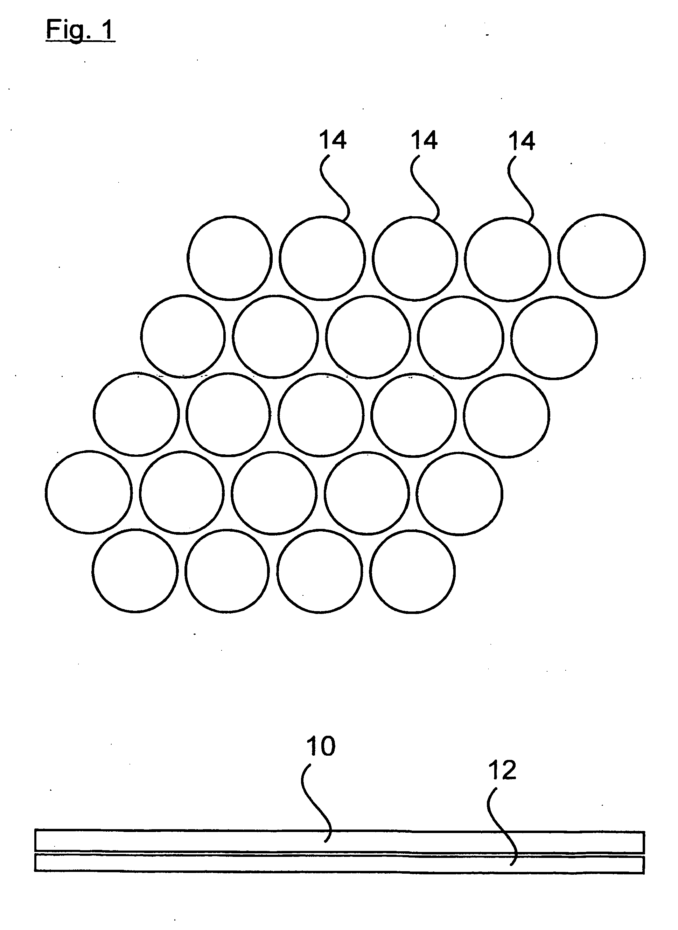

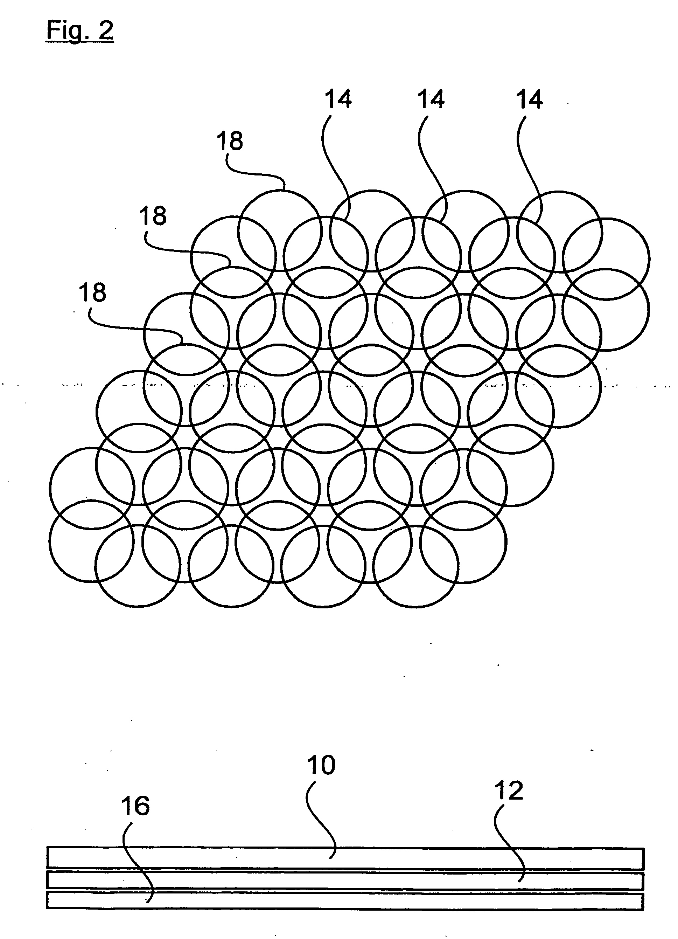

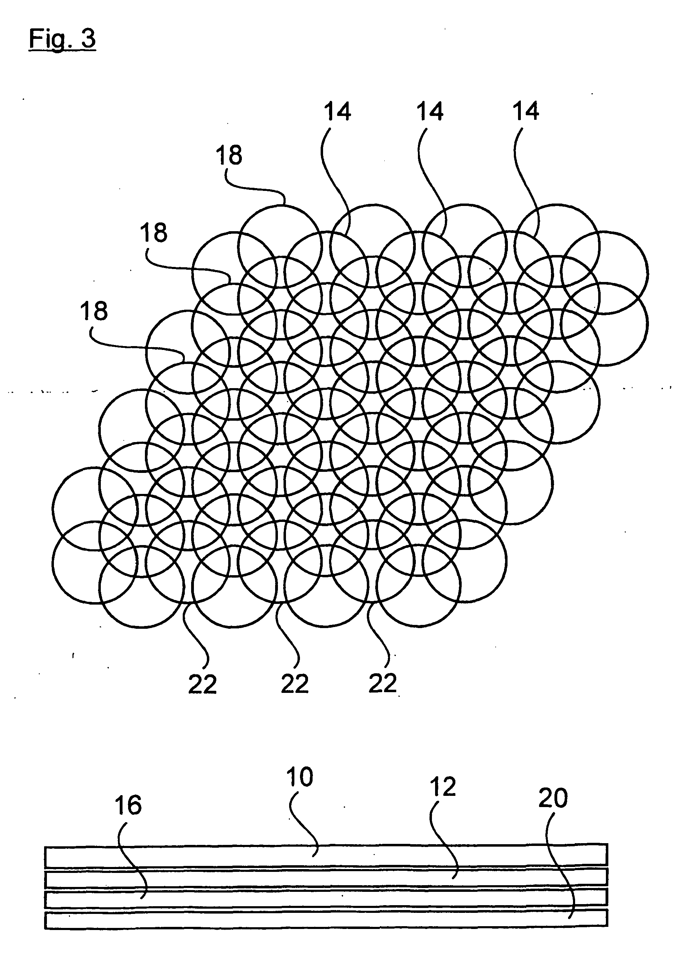

Fig. 1 zeigt eine bekannte Anordnung. In Fig. 2 bis Fig. 4 ist eine bevorzugte Ausführungsform des Induktionskochfeldes gemäß der Erfindung dargestellt. Um die Struktur des Induktionskochfeldes zu verdeutlichen, ist in Fig. 1 bis Fig. 3 das Induktionskochfeld unvollständig dargestellt. In Fig. 1 sind drei untere Schichten, in Fig. 2 zwei untere Schichten und in Fig.3 eine untere Schicht des Induktionskochfeldes nicht dargestellt.

Fig. 1 zeigt eine schematische Draufsicht und Schnittansicht des Induktionskochfeldes mit einem Trägersubstrat 10 und einer ersten Schicht 12. Die Schnittansicht verdeutlicht die Anordnung der ersten Schicht 12 unterhalb des Trägersubstrats 10. Die erste Schicht umfasst eine Vielzahl Induktionsspulen 14. In der Draufsicht ist die Anordnung der Induktionsspulen 14 abgebildet. Die Induktionsspulen 14 sind so angeordnet, dass das Trägersubstrat möglicht vollständig abgedeckt wird. Die Induktionsspulen 14 sind als Kreise dargestellt. Konkret sind die Induktionsspulen 14 als kreisförmige Leiterbahnen oder Leiterschleifen ausgebildet. Ebenso können die Induktionsspulen 14 auch als spiralförmige Leiterbahnen oder Leiterschleifen ausgebildet sein. Bei alternativen Ausführungsformen können die Induktionsspulen 14 auch eine ovale, ellipsenförmige, rechteckige, sechseckige oder achteckige Kontur aufweisen. Im Prinzip sind beliebige Konturen für die Induktionsspulen 14 möglich, wobei das Trägersubstrat 10 möglichst vollständig von den Induktionsspulen 14 abgedeckt wird.

In Fig. 2 ist das Induktionskochfeld gemäß Fig. 1 dargestellt, bei dem neben dem Trägersubstrat 10 und der ersten Schicht 12 mit den Induktionsspulen 14 zusätzlich eine zweite Schicht 16 mit einer Vielzahl Induktionsspulen 18 abgebildet ist. Die Induktionsspulen 18 der zweiten Schicht 16 haben die gleiche Größe wie die Induktionsspulen 14 der ersten Schicht 12. Die Induktionsspulen 18 sind auf der zweiten Schicht 16 nach dem gleichen Muster angeordnet wie die Induktionsspulen 14 auf der ersten Schicht 12. Jedoch sind die beiden Schichten 12 und 16 gegeneinander verschoben, so dass eine Induktionsspule 14 der ersten Schicht 12 sich gleichmäßig mit drei Induktionsspule 18 der dritten Schicht 16 überlappt. Umgekehrt überlappt sich eine Induktionsspule 18 der dritten Schicht 16 gleichmäßig mit drei ' Induktionsspulen 14 der ersten Schicht 12.

Fig. 3 zeigt das Induktionskochfeld gemäß Fig. 2, bei dem zusätzlich eine dritte Schicht 20 mit einer Vielzahl Induktionsspulen 22 dargestellt ist. Die Induktionsspulen 22 der dritten Schicht 20 haben die gleiche Größe wie die Induktionsspulen 14 der ersten Schicht 12 und die Induktionsspulen 18 zweiten Schicht 16. Die Induktionsspulen 22 sind auf der dritten Schicht 20 nach dem gleichen Muster angeordnet wie die Induktionsspulen 14 und 18 auf der ersten Schicht 12 und zweiten Schicht 16. Jedoch ist auch die dritte Schicht 20 sowohl gegenüber der ersten Schicht 12 als auch gegenüber der zweiten Schicht 16 verschoben. Eine Induktionsspule 22 der dritten Schicht 20 überlappt sich gleichmäßig mit drei Induktionsspulen 14 der ersten Schicht 12 und zugleich mit drei Induktionsspulen 18 der zweiten Schicht 16. Die dritte Schicht 20 ist unterhalb der zweiten Schicht 16 angeordnet.

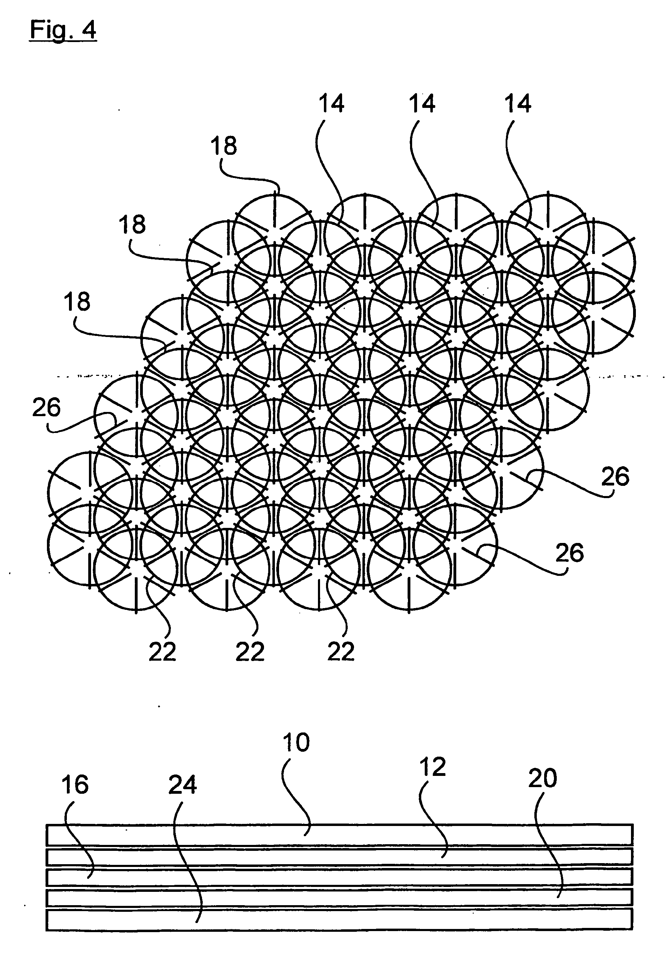

In Fig. 4 ist das Induktionskochfeld gemäß Fig. 3 dargestellt, bei dem zusätzlich eine Ferritschicht 24 mit einer Vielzahl Ferritelementen 26 abgebildet ist. Die Ferritschicht 24 ist unterhalb der dritten Schicht 16 angeordnet. Die Ferritelemente 26 sind langgestreckt ausgebildet und deren Länge entspricht etwa dem Radius der Induktionsspulen 14, 18 und 22. Die Ferritelemente 26 bilden eine Vielzahl gleichseitiger Dreiecke. Jedes Ferritelement 26 befindet sich zwischen zwei nebeneinanderliegenden Induktionsspulen 14, 18 bzw. 22. Die Ferritelemente 26 beeinflussen den Verlauf der magnetischen Feldlinien.

Das Induktionskochfeld weist Stromversorgungsschaltungen für die Induktionsspulen 14, 18 und 22 auf, die in den Zeichnungen nicht dargestellt sind. Zwischen den Stromversorgungsschaltungen und den Induktionsspulen 14, 18 und 22 sind eine oder mehrere Selektionsschaltungen vorgesehen, die ebenfalls nicht dargestellt sind. Die Selektionsschaltungen stellen die elektrische Verbindung zwischen den Stromversorgungsschaltungen und den Induktionsspulen 14, 18 und 22 her. Durch die Selektionsschaltungen werden diejenigen Induktionsspulen 14, 18 bzw. 22 aktiviert, in deren Umgebung sich ein Garbehälter befindet. Dabei werden niemals sich überlappende Induktionsspulen 14, 18 bzw. 22 gleichzeitig aktiviert. Die Anzahl der Stromversorgungsschaltungen ist somit stets kleiner als die der Induktionsspulen 14, 18 und 22. Dies ist vorteilhaft hinsichtlich der Baugröße und der Kosten.

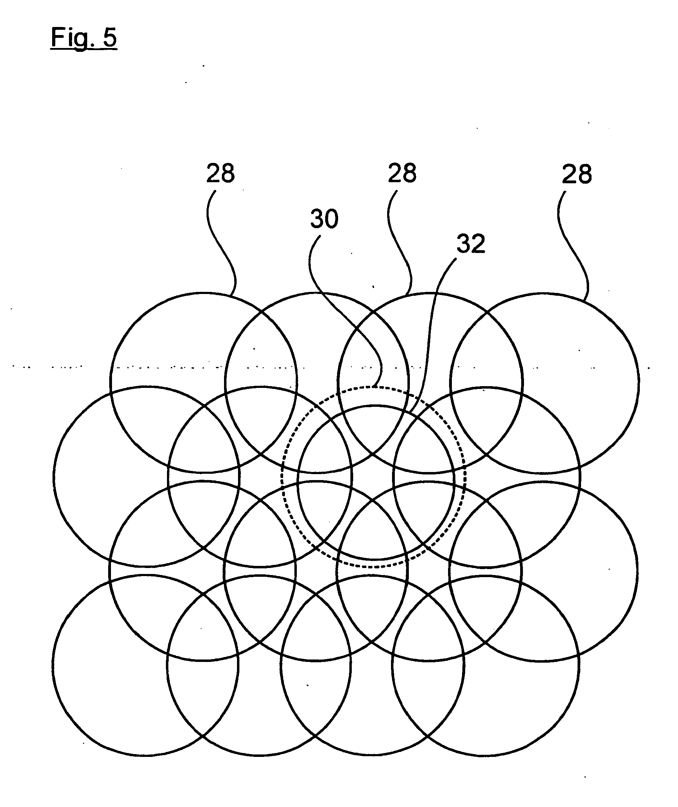

In Fig. 5 ist eine schematische Draufsicht eines ersten Anwendungsbeispiels gemäß der Erfindung dargestellt. Dabei befindet sich ein Garbehälter 32 auf einem Induktionskochfeld mit überlappenden Induktionsspulen 28 und 30. Die Induktionsspulen 28 und 30 verteilen sich auf drei Schichten, die parallel zueinander angeordnet sind. Innerhalb einer Schicht sind die Induktionsspulen 28 und 30 stets nebeneinander und möglichst flächendeckend angeordnet. Die Induktionsspulen 28 und 30 in Fig. 5 haben alle einen Durchmesser von 140 mm. Der Garbehälter 32 weist eine kreisscheibenförmige Bodenfläche mit einem Durchmesser von 120 mm auf. Der Garbehälter 32 ist oberhalb der Induktionsspule 30 angeordnet, die als Einzige aktiviert ist. Die übrigen Induktionsspulen 28 sind nicht aktiviert. Diese Darstellung verdeutlicht, dass es aufgrund der überlappenden Induktionsspulen 28 und 30 zahlreiche Möglichkeiten gibt, den Garbehälter auf dem Induktionskochfeld gemäß der Erfindung zu positionieren. Die Induktionsspulen 28 und 30 haben eine Leistung von jeweils etwa 1800 W.

Die Stromversorgungsschaltungen sind mit den Induktionsspulen 28 und 30 über eine oder mehrere Selektionsschaltungen gekoppelt. Da die überlappenden Induktionsspulen 28 und 30 niemals gleichzeitig aktiviert werden, sind stets weniger Stromversorgungsschaltungen als Induktionsspulen 28 und 30 erforderlich.

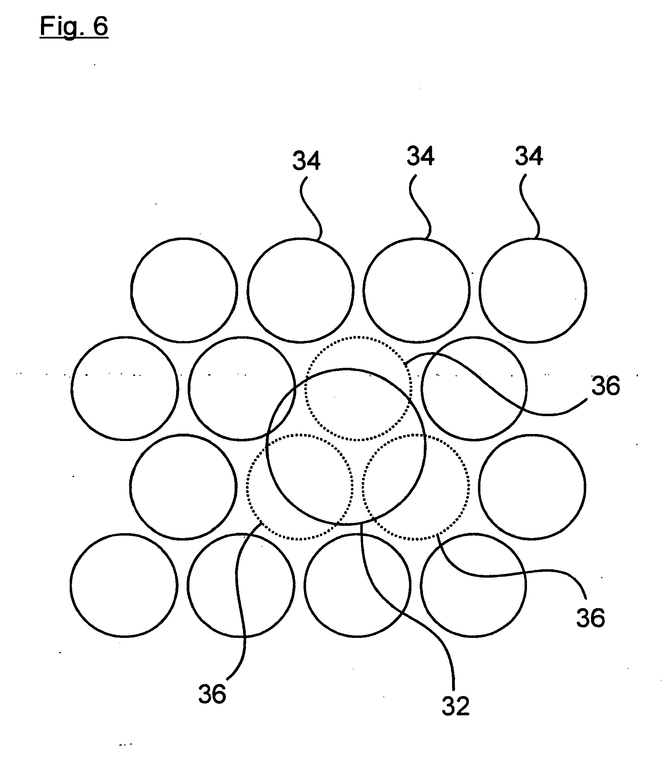

Fig. 6 zeigt ein Vergleichsbeispiel für den Garbehälter 32 aus Fig. 5 auf einem Induktionskochfeld, bei dem aktivierte Induktionsspulen 36 und nicht-aktivierte Induktionsspulen 34 auf herkömmliche Weise, d.h. nicht-überlappend angeordnet sind. Die Induktionsspulen 34 und 36 haben einen Durchmesser von 80 mm und eine Leistung von jeweils etwa 500 W. Bei der herkömmlichen Anordnung in Fig. 6 ist für jede der Induktionsspulen 34 und 36 eine Stromversorgungsschaltung erforderlich.

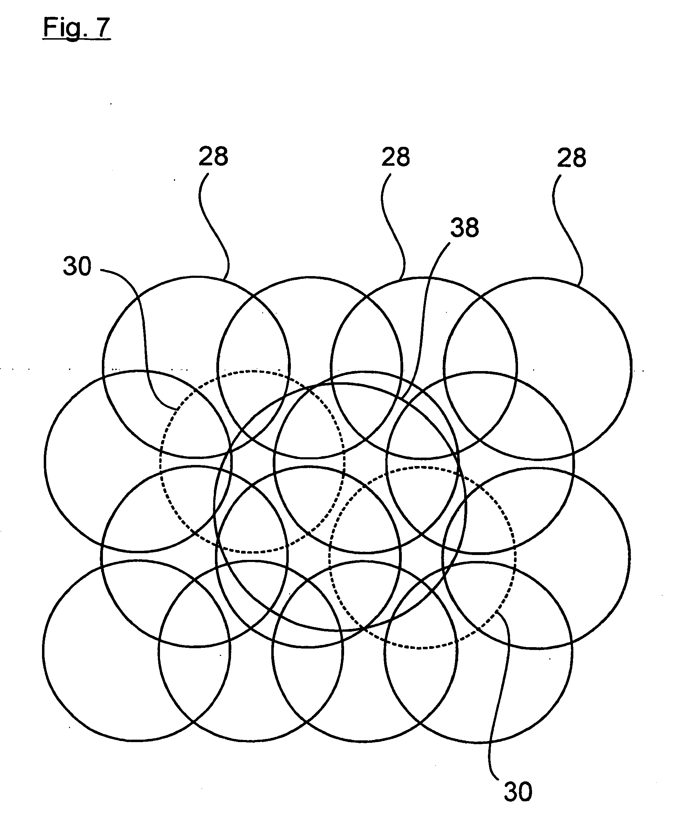

In Fig. 7 ist eine schematische Draufsicht eines zweiten Anwendungsbeispiels gemäß der Erfindung dargestellt. Dabei befindet sich ein Garbehälter 38 auf einem Induktionskochfeld mit den überlappenden Induktionsspulen 28 und 30. Die Induktionsspulen 28 und 30 sind ebenso wie in Fig. 5 angeordnet und haben einen Durchmesser von 140 mm. Der Garbehälter 38 weist eine kreisscheibenförmige Bodenfläche mit einem Durchmesser von 210 mm auf. Der Garbehälter 38 ist oberhalb der beiden aktivierten Induktionsspulen 30 angeordnet. Die übrigen Induktionsspulen 28 sind nicht aktiviert. Auch für den relativ großen Garbehälter 38 gibt es auf dem Induktionskochfeld mehrere Positionierungsmöglichkeiten. Die beiden aktivierten Induktionsspulen 30 haben eine Leistung von jeweils, etwa 1800 W, so dass dem Garbehälter eine Leistung von 3600 W zugeführt wird.

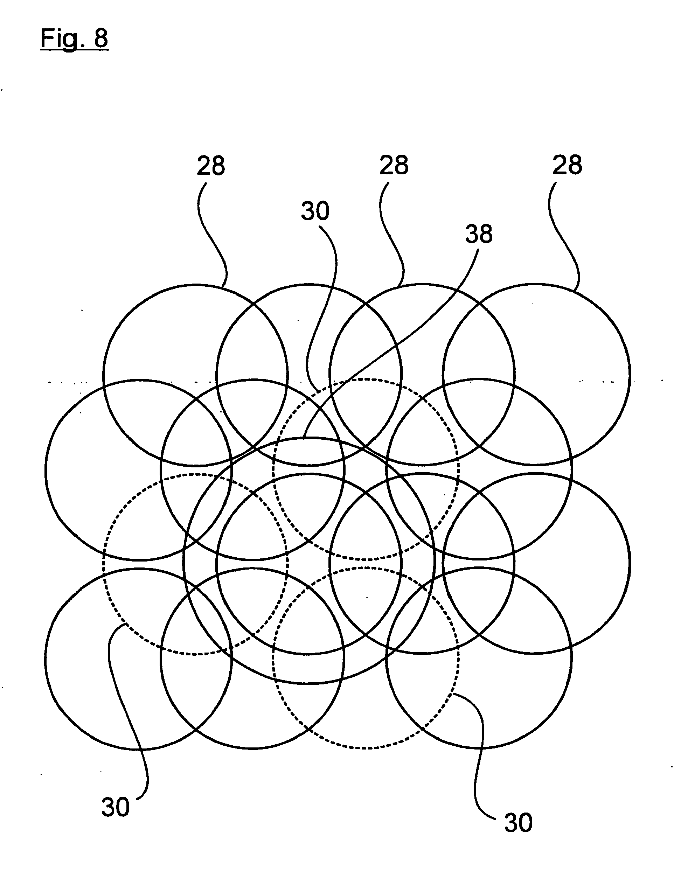

Fig. 8 zeigt eine schematische Draufsicht eines dritten Anwendungsbeispiels gemäß der Erfindung. Dabei befindet sich der Garbehälter 38 auf dem gleichen Induktionskochfeld wie in Fig. 7 mit den überlappenden Induktionsspulen 28 und 30. Der Garbehälter 38 mit dem Bodenflächen-Durchmesser von 210 mm ist oberhalb der drei aktivierten Induktionsspulen 30 angeordnet, die in Form eines gleichseitigen Dreiecks angeordnet sind. Die übrigen Induktionsspulen 28 sind nicht aktiviert. Die drei aktivierten Induktionsspulen 30 haben eine Leistung von jeweils etwa 1800 W, so dass dem Garbehälter eine Leistung von 5400 W zugeführt wird. Fig. 7 und Fig. 8 verdeutlichen die zahlreichen Positionierungsmöglichen für den Garbehälter 38 auf dem Induktionskochfeld.

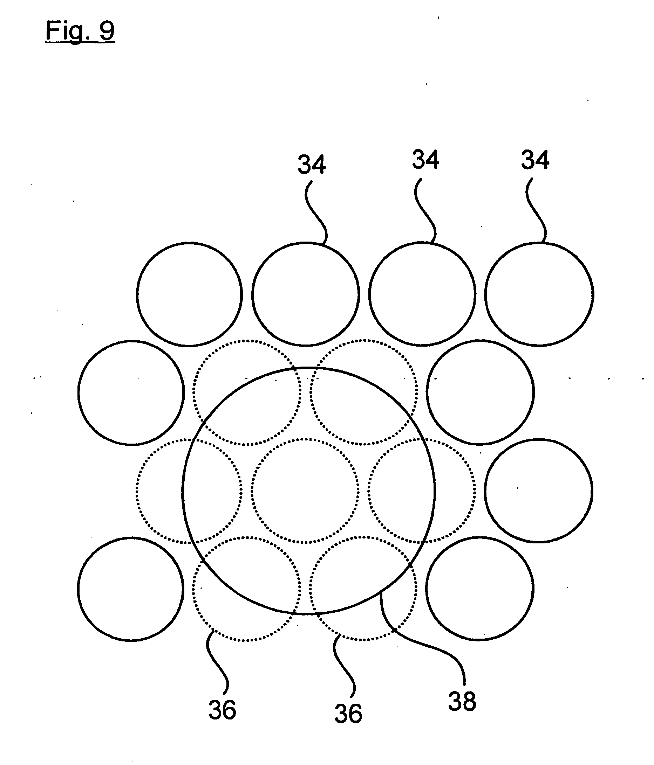

In Fig. 9 ist dargestellt, wie der Garbehälter 38 auf einem Induktionskochfeld mit der herkömmlichen Anordnung der Induktionsspulen 34 und 36 gemäß Fig. 6 positioniert ist. Der Garbehälter 38, dessen Bodenfläche den Durchmesser von 210 mm aufweist, ist oberhalb von sieben aktivierten Induktionsspulen 36 angeordnet. Da jede Induktionsspule 36 eine Leistung von 500 W aufweist, wird an den Garbehälter 38 die Leistung von 3500 W abgegeben. Dies ist deutlich weniger als in Fig. 8 und auch weniger als in Fig. 7. Jedoch müssen in Fig. 9 sieben Stromversorgungsschaltungen aktiviert werden, während in Fig. 7 nur zwei und in Fig. 8 nur drei aktiviert sind.

Bei dem Induktionskochfeld gemäß der Erfindung werden weniger Stromversorgungsschaltungen als bei der herkömmlichen Anordnung benötigt, wodurch die Baugröße und die Kosten des Induktionskochfeldes reduziert werden. Der Benutzer hat beim Induktionskochfeld gemäß der Erfindung mehr Möglichkeiten als bei der herkömmlichen Anordnung, einen oder mehrere Garbehälter zu positionieren. Somit kann ein größerer Flächenabschnitt des erfindungsgemäßen Induktionskochfeldes als Arbeitsfläche verwendet werden, so dass der Benutzer mehr Möglichkeiten als bei der herkömmlichen Anordnung der Induktionsspulen, hat, seinen Arbeitsplatz auszugestalten.

Je mehr Schichten 12, 16 und 20 das Induktionskochfeld aufweist, desto mehr Positioniermöglichkeiten gibt es für die Garbehälter 32 und 38 auf dem Trägersubstrat 10. Wenn eine besonders hohe Einbautiefe für das Induktionskochfeld möglich ist, können entsprechend viele Schichten 12, 16 und 20 vorgesehen sein. Dadurch lässt sich ein besonders hohes Auflösungsvermögen für Induktionskochfeld erreichen. Die Induktionsspulen 14, 18 und 22 können innerhalb einer Schicht 12, 16 bzw. 20 auch verschiedene Durchmesser aufweisen und nach einem vorbestimmten Muster angeordnet sein.

### Bezugszeichenliste

- 10: Trägersubstrat
- 12: erste Schicht
- 14: Induktionsspule der ersten Schicht
- 16: zweite Schicht
- 18: Induktionsspule der zweiten Schicht
- 20: dritte Schicht
- 22: Induktionsspule der dritten Schicht
- 24: Ferritschicht
- 26: Ferritelement
- 28: nicht-aktivierte Induktionsspule
- 30: aktivierte Induktionsspule
- 32: Garbehälter, klein
- 34: nicht-aktivierte Induktionsspule, herkömmlicher Art
- 36: aktivierte Induktionsspule, herkömmlicher Art
- 38: Garbehälter, groß

## Patentansprüche

1. Induktionskochfeld, das Folgendes aufweist:
- einen Träger (10), dessen Oberseite zum Positionieren von wenigstens einem Gärbehälter vorgesehen ist,
- mindestens eine erste Induktionsspule (14), die unterhalb des Trägers (10) angeordnet ist, und
- mindestens eine zweite Induktionsspule (18, 22), die unterhalb der ersten Induktionsspule (14) angeordnet ist, wobei
- die erste(n) Induktionsspule(n) (14, 18, 22) und die zweite(n), vorzugsweise benachbarte(n), Induktionsspule(n) (14, 18, 22) einander teilweise überlappend angeordnet sind,
**dadurch gekennzeichnet, dass**
den Induktionsspulen (14, 18, 22) wenigstens eine Selektionsschaltung vorgeschaltet ist, durch die nach einem vorbestimmten Schema ausgewählte Induktionsspulen (14, 18, 22) aktiviert werden oder aktivierbar sind, wobei die Selektionsschaltung derart ausgebildet oder einstellbar ist, dass diejenige Induktionsspule aktiviert wird oder diejenigen Induktionsspulen aktiviert werden, die sich unterhalb des Garbehälters befindet bzw. befinden, und dass die überlappend angeordneten Induktionsspulen (14, 18, 22) nicht gleichzeitig aktiviert werden oder aktivierbar sind, und wobei die nicht benutzten Induktionsspulen (14, 18, 22) elektrisch abgekoppelt werden oder abgekoppelt sind.

2. Induktionskochfeld nach Anspruch 1,
**dadurch gekennzeichnet, dass**
Sensoren zum Erfassen der Position des Garbehälters vorgesehen sind, so dass die Induktionsspulen (14, 18, 22), die sich unterhalb des Garbehälters befinden, manuell, halbautomatisch oder automatisch ausgewählt werden oder auswählbar sind.

3. Induktionskochfeld nach einem der vorhergehenden Ansprüche,
**dadurch gekennzeichnet, dass**
die Selektionsschaltung derart programmiert oder programmierbar ist, dass die überlappend angeordneten Induktionsspulen (14, 18, 22) nicht gleichzeitig aktiviert werden oder aktivierbar sind.

4. Induktionskochfeld nach einem der vorhergehenden Ansprüche, bei dem
- eine erste Schicht (12) mit mindestens einer Induktionsspule (14), die unterhalb des Trägersubstrats (10) angeordnet ist, und
- wenigstens eine weitere Schicht (16, 20) mit jeweils mindestens einer Induktionsspule (18, 22), die unterhalb der ersten Schicht (12) angeordnet ist, wobei
- die Induktionsspulen (14, 18, 22) der einen Schicht (12, 16, 20) und die benachbarten Induktionsspulen (14, 18, 22) der jeweils anderen Schicht bzw. Schichten (12, 16, 20) teilweise überlappend angeordnet sind.

5. Induktionskochfeld nach einem der vorhergehenden Ansprüche,
**dadurch gekennzeichnet, dass**
die Induktionsspulen (14, 18, 22) zumindest teilweise als Leiterbahnen ausgebildet sind.

6. Induktionskochfeld nach einem der vorhergehenden Ansprüche,
**dadurch gekennzeichnet, dass**
die Induktionsspulen (14, 18, 22) zumindest teilweise als Leiterschleifen ausgebildet sind.

7. Induktionskochfeld nach einem der vorhergehenden Ansprüche,
**dadurch gekennzeichnet, dass**
die Induktionsspulen (14, 18, 22) zumindest teilweise als kreisförmige Leiterschleifen und/oder Leiterbahnen ausgebildet sind.

8. Induktionskochfeld nach einem der vorhergehenden Ansprüche,
**dadurch gekennzeichnet, dass**
die Induktionsspulen (14, 18, 22) zumindest teilweise als spiralförmige Leiterschleifen und/oder Leiterbahnen ausgebildet sind.

9. Induktionskochfeld nach einem der vorhergehenden Ansprüche,
**dadurch gekennzeichnet, dass**
die Induktionsspulen (14, 18, 22) einer Schicht (12, 16, 20) möglichst flächendeckend angeordnet sind.

10. Induktionskochfeld nach einem der vorhergehenden Ansprüche,
**dadurch gekennzeichnet, dass**
die Induktionsspulen (14, 18, 22) einer Schicht (12, 16, 20) die gleiche Form und/oder die gleiche Größe aufweisen.

11. Induktionskochfeld nach einem der vorhergehenden Ansprüche,
**dadurch gekennzeichnet, dass**
die Induktionsspulen (14, 18, 22) von mehreren Schichten (12, 16, 20) die gleiche Form und/oder die gleiche Größe aufweisen.

12. Induktionskochfeld nach einem der vorhergehenden Ansprüche,
**dadurch gekennzeichnet, dass**
eine Induktionsspule (14, 18, 22) von einer Schicht (12, 16, 20) und drei Induktionsspulen (14, 18, 22) von einer weiteren Schicht (12, 16, 20) sich überlappen.

13. Induktionskochfeld nach einem der vorhergehenden Ansprüche,
**dadurch gekennzeichnet, dass**
eine Induktionsspule (14, 18, 22) von einer Schicht (12, 16, 20) und drei Induktionsspulen (14, 18, 22) von jeder weiteren Schicht (12, 16, 20) sich überlappen.

14. Induktionskochfeld nach einem der vorhergehenden Ansprüche,
**dadurch gekennzeichnet, dass**
das Induktionskochfeld eine Ferritschicht (24) mit einer Vielzahl Ferritelementen (26) aufweist.

15. Induktionskochfeld nach Anspruch 14,
**dadurch gekennzeichnet, dass**
die Ferritschicht (24) unterhalb der Schichten (12, 16, 20) mit den Induktionsspulen (14, 18, 22) angeordnet ist.

16. Induktionskochfeld nach Anspruch 14 oder 15,
**dadurch gekennzeichnet, dass**
die Ferritelemente (26) langgestreckt ausgebildet sind.

17. Induktionskochfeld nach einem der Ansprüche 14 bis 16,
**dadurch gekennzeichnet, dass**
die Ferritelemente (26) zwischen zwei benachbarten Induktionsspulen (14, 18, 22) von einer Schicht (12, 16, 20) angeordnet sind.

18. Induktionskochfeld nach einem der Ansprüche 14 bis 17,
**dadurch gekennzeichnet, dass**
die Ferritelemente (26) eine Vielzahl gleichseitiger Dreiecke bilden.

19. Induktionskochfeld nach einem der Ansprüche 7 bis 18,
**dadurch gekennzeichnet, dass**
die Induktionsspulen (14, 18, 22) einen Durchmesser zwischen 100 mm und 200 mm aufweisen.

20. Induktionskochfeld nach einem der vorhergehenden Ansprüche,
**dadurch gekennzeichnet, dass**
der Selektionsschaltung wenigstens eine Stromversorgungsschaltung vorgeschaltet ist.

21. Induktionskochfeld nach Anspruch 20,
**dadurch gekennzeichnet, dass**
als Stromversorgungsschaltung eine Inverterschaltung vorgesehen ist.

22. Induktionskochfeld nach Anspruch 20 oder 21,
**dadurch gekennzeichnet, dass**
die Anzahl der Stromversorgungsschaltungen niedriger ist als die Anzahl der Induktionsspulen (14, 18, 22) ist.

23. Induktionskochfeld nach einem der vorhergehenden Ansprüche,
**dadurch gekennzeichnet, dass**
der Träger (10) aus Glaskeramik oder Glas oder Keramik hergestellt ist.

## Claims

1. Induction hob which has the following:
- a support (10), the upper side of which is provided for positioning at least one cooking container,
- at least one first induction coil (14), which is arranged below the support (10), and
- at least one second induction coil (18, 22), which is arranged below the first induction coil (14), wherein
- the first induction coil(s) (14, 18, 22) and the second, preferably adjacent, induction coil(s) (14, 18, 22) are arranged to be partly overlapping one another,
**characterised in that** at least one selection circuit is connected upstream of the induction coils (14, 18, 22), by means of which induction coils (14, 18, 22) selected according to a predetermined scheme are activated or can be activated, wherein the selection circuit is designed or can be adjusted such that, that induction coil is activated or those induction coils are activated which is or are located below the cooking container, and **in that** the induction coils (14, 18, 22) arranged to be overlapping are not activated at the same time or cannot be activated, and wherein the unused induction coils (14, 18, 22) are electrically uncoupled.

2. Induction hob according to claim 1, **characterised in that** sensors for recording the position of the cooking container are provided so that the induction coils (14, 18, 22), which are located below the cooking container, are selected or can be selected manually, semi-automatically or automatically.

3. Induction hob according to one of the preceding claims, **characterised in that** the selection circuit is programmed or can be programmed such that the induction coils (14, 18, 22) arranged to be overlapping are not activated at the same time or cannot be activated.

4. Induction hob according to one of the preceding claims, in which
- a first layer (12) having at least one induction coil (14) which is arranged below the support substrate (10), and
- at least one further layer (16, 20) having in each case at least one induction coil (18, 22) which is arranged below the first layer (12), wherein
- the induction coils (14, 18, 22) of the one layer (12, 16, 20) and the adjacent induction coils (14, 18, 22) of the particular other layer or layers (12, 16, 20) are arranged to be partly overlapping.

5. Induction hob according to one of the preceding claims, **characterised in that** the induction coils (14, 18, 22) are designed at least partly as conducting tracks.

6. Induction hob according to one of the preceding claims, **characterised in that** the induction coils (14, 18, 22) are designed at least partly as conducting loops.

7. Induction hob according to one of the preceding claims, **characterised in that** the induction coils (14, 18, 22) are designed at least partly as circular conducting loops and/or conducting tracks.

8. Induction hob according to one of the preceding claims, **characterised in that** the induction coils (14, 18, 22) are designed at least partly as helical conducting loops and/or conducting tracks.

9. Induction hob according to one of the preceding claims, **characterised in that** the induction coils (14, 18, 22) of a layer (12, 16, 20) are arranged to cover as much surface as possible.

10. Induction hob according to one of the preceding claims, **characterised in that** the induction coils (14, 18, 22) of a layer (12, 16, 20) have the same shape and/or the same size.

11. Induction hob according to one of the preceding claims, **characterised in that** the induction coils (14, 18, 22) of several layers (12, 16, 20) have the same shape and/or the same size.

12. Induction hob according to one of the preceding claims, **characterised in that** an induction coil (14, 18, 22) of one layer (12, 16, 20) and three induction coils (14, 18, 22) of a further layer (12, 16, 20) overlap.

13. Induction hob according to one of the preceding claims, **characterised in that** an induction coil (14, 18, 22) of one layer (12, 16, 20) and three induction coils (14, 18, 22) of each further layer (12, 16, 20) overlap.

14. Induction hob according to one of the preceding claims, **characterised in that** the induction hob has a ferrite layer (24) with a number of ferrite elements (26).

15. Induction hob according to claim 14, **characterised in that** the ferrite layer (24) is arranged below the layers (12, 16, 20) with the induction coils (14, 18, 22).

16. Induction hob according to claim 14 or 15, **characterised in that** the ferrite elements (26) are designed to be elongated.

17. Induction hob according to one of claims 14 to 16, **characterised in that** the ferrite elements (26) are arranged between two adjacent induction coils (14, 18, 22) of a layer (12, 16, 20).

18. Induction hob according to one of claims 14 to 17, **characterised in that** the ferrite elements (26) form a number of equilateral triangles.

19. Induction hob according to one of claims 7 to 18, **characterised in that** the induction coils (14, 18, 22) have a diameter between 100 mm and 200 mm.

20. Induction hob according to one of the preceding claims, **characterised in that** at least one current-supply circuit is connected upstream of the selection circuit.

21. Induction hob according to claim 20, **characterised in that** a NOT-circuit is provided as the current-supply circuit.

22. Induction hob according to claim 20 or 21, **characterised in that** the number of current-supply circuits is lower than the number of induction coils (14, 18, 22).

23. Induction hob according to one of the preceding claims, **characterised in that** the support (10) is produced from glass ceramic or glass or ceramic.

## Revendications

1. Champ de cuisson à induction, qui présente ce qui suit:
- un support (10) dont le côté supérieur est prévu pour le positionnement d'au moins un récipient de cuisson,
- au moins une première bobine d'induction (14) qui est disposée en dessous du support (10), et
- au moins une deuxième bobine d'induction (18, 22) qui est disposée en dessous de la première bobine d'induction (14), où
- la ou les premières bobines d'induction (14, 18, 22) et la ou les deuxièmes bobines d'induction, de préférence avoisinantes, (14, 18, 22) sont disposées pour se chevaucher partiellement,
**caractérisé en ce qu'**il est disposé en amont des bobines d'induction (14, 18, 22) au moins un montage de sélection par lequel des bobines d'induction (14, 18, 22) sélectionnées selon un schéma prédéterminé sont activées ou peuvent être activées, où le montage de sélection est réalisé ou réglable de telle sorte que ce soit la bobine d'induction qui est activée ou les bobines d'induction qui sont activées qui se trouvent en dessous du récipient de cuisson, et **en ce que** les bobines d'induction (14, 18, 22) qui se chevauchent ne sont pas activables ou activées simultanément, et où les bobines d'induction non utilisées (14, 18, 22) sont ou vont être découplées électriquement.

2. Champ de cuisson à induction selon la revendication 1, **caractérisé en ce que** des capteurs sont prévus pour détecter la position du récipient de cuisson de sorte que les bobines d'induction (14, 18, 22) qui se trouvent en dessous du récipient de cuisson, sont ou peuvent être sélectionnées manuellement, semi-automatiquement ou automatiquement.

3. Champ de cuisson à induction selon l'une des revendications précédentes, **caractérisé en ce que** le montage de sélection est ou peut être programmé de façon que les bobines d'induction (14, 18, 22) qui se chevauchent ne sont pas activées ou activables simultanément.

4. Champ de cuisson à induction selon l'une des revendications précédentes, dans lequel
- une première couche (12) avec au moins une bobine d'induction (14), qui est disposée en dessous du substrat de support (10), et
- au moins une autre couche (16, 20) avec respectivement au moins une bobine d'induction (18, 22) qui est disposée en dessous de la première couche (12), où
- les bobines d'induction (14, 18, 22) d'une couche (12, 16, 20) et les bobines d'induction avoisinantes (14, 18, 22) de la ou des autres couches (12, 16, 20) sont disposées pour se chevaucher partiellement.

5. Champ de cuisson à induction selon l'une des revendications précédentes, **caractérisé en ce que** les bobines d'induction (14, 18, 22) sont réalisés au moins partiellement comme pistes conductives.

6. Champ de cuisson à induction selon l'une des revendications précédentes, **caractérisé en ce que** les bobines d'induction (14, 18, 22) sont réalisées au moins partiellement comme boucles conductives.

7. Champ de cuisson à induction selon l'une des revendications précédentes, **caractérisé en ce que** les bobines d'induction (14, 18, 22) sont réalisées au moins partiellement comme boucles conductives et/ou pistes conductives circulaires.

8. Champ de cuisson à induction selon l'une des revendications précédentes, **caractérisé en ce que** les bobines d'induction (14, 18, 22) sont réalisées au moins partiellement comme boucles conductives et/ou pistes conductives en forme de spirale.

9. Champ de cuisson à induction selon l'une des revendications précédentes, **caractérisé en ce que** les bobines d'induction (14, 18, 22) d'une couche (12, 16, 20) sont disposées avec un recouvrement de face le plus grand possible.

10. Champ de cuisson à induction selon l'une des revendications précédentes, **caractérisé en ce que** les bobines d'induction (14, 18, 22) d'une couche (12, 16, 20) ont la même forme et/ou la même grandeur.

11. Champ de cuisson à induction selon l'une des revendications précédentes, **caractérisé en ce que** les bobines d'induction (14, 18, 22) de plusieurs couches (12, 16, 20) ont la même forme et/ou la même grandeur.

12. Champ de cuisson à induction selon l'une des revendications précédentes, **caractérisé en ce qu'**une bobine d'induction (14, 18, 22) d'une couche (12, 16, 20) et trois bobines d'induction (14, 18, 22) d'une autre couche (12, 16, 20) se chevauchent.

13. Champ de cuisson à induction selon l'une des revendications précédentes, **caractérisé en ce qu'**une bobine d'induction (14, 18, 22) d'une couche (12, 16, 20) et trois bobines d'induction de chaque autre couche (12, 16, 20) se chevauchent.

14. Champ de cuisson à induction selon l'une des revendications précédentes, **caractérisé en ce que** le champ de cuisson à induction présente une couche de ferrite (24) avec une pluralité d'éléments en ferrite (26).

15. Champ de cuisson à induction selon la revendication 14, **caractérisé en ce que** la couche de ferrite (24) est disposée en dessous des couches (12, 16, 20) avec les bobines d'induction (14, 18, 22).

16. Champ de cuisson à induction selon la revendication 14 ou 15, **caractérisé en ce que** les éléments en ferrite (26) sont réalisés en une forme allongée.

17. Champ de cuisson à induction selon l'une des revendications 14 à 16, **caractérisé en ce que** les éléments en ferrite (26) sont disposés entre deux bobines d'induction avoisinantes (14, 18, 22) d'une couche (12, 16, 20).

18. Champ de cuisson à induction selon l'une des revendications 14 à 17, **caractérisé en ce que** les éléments en ferrite (26) forment une pluralité de triangles équilatéraux.

19. Champ de cuisson à induction selon l'une des revendications 7 à 18, **caractérisé en ce que** les bobines d'induction (14, 18, 22) ont un diamètre entre 100 mm et 200 mm.

20. Champ de cuisson à induction selon l'une des revendications précédentes, **caractérisé en ce qu'**il est disposé en amont du montage de sélection au moins un montage d'alimentation en courant.

21. Champ de cuisson à induction selon la revendication 20, **caractérisé en ce qu'**il est prévu comme montage d'alimentation en courant un montage inverseur.

22. Champ de cuisson à induction selon la revendication 20 ou 21, **caractérisé en ce que** le nombre de montages d'alimentation en courant est plus bas que le nombre des bobines d'induction (14, 18, 22).

23. Champ de cuisson à induction selon l'une des revendications précédentes, **caractérisé en ce que** le support (10) est fabriqué en vitrocéramique ou en verre ou céramique.
